(19) **Europäisches Patentamt / European Patent Office / Office européen des brevets**

(11) **EP 2 232 724 B1**

(12) **EUROPEAN PATENT SPECIFICATION**

(45) Date of publication and mention
of the grant of the patent:
**15.10.2014 Bulletin 2014/42**

(51) Int Cl.:
**H04B 7/005** (2006.01)    **H04W 72/14** (2009.01)
**H04L 1/00** (2006.01)    **H04L 5/00** (2006.01)

(21) Application number: **08705329.4**

(22) Date of filing: **18.01.2008**

(86) International application number:
**PCT/SE2008/050057**

(87) International publication number:
**WO 2009/091305 (23.07.2009 Gazette 2009/30)**

(54) **A METHOD AND A DEVICE FOR IMPROVED SCHEDULING**

VERFAHREN UND EINRICHTUNG FÜR VERBESSERTES SCHEDULING

PROCÉDÉ ET DISPOSITIF POUR UNE PLANIFICATION AMÉLIORÉE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**29.09.2010 Bulletin 2010/39**

(73) Proprietor: **Telefonaktiebolaget LM Ericsson
(publ)
164 83 Stockholm (SE)**

(72) Inventors:
• **GANNHOLM, Magnus
S-435 38 Mölnlycke (SE)**
• **JOHANSSON, Magnus B
S-416 51 Göteborg (SE)**

(74) Representative: **Kühn, Friedrich Heinrich
Ericsson AB
Patent Unit LTE
Torshamnsgatan 23
164 80 Stockholm (SE)**

(56) References cited:
• **PANASONIC: "CCE aggregation dependent
transport format signaling and padding
analysis", 3GPP DRAFT; R1-080132, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. Sevilla,
Spain; 20080109, 9 January 2008 (2008-01-09),
XP050108663, [retrieved on 2008-01-09]**

• **MOTOROLA: "Control Symbol Power Limitation
and REG Interleaving", 3GPP DRAFT; R1-080098
- CSYM POWER LIMITATION AND REG
INTERLEAVING, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG1, no. Sevilla,
Spain; 20080109, 9 January 2008 (2008-01-09),
XP050108633, [retrieved on 2008-01-09]**
• **HUAWEI: "E-UTRA Downlink L1/L2 Control
Channel Structure", 3GPP DRAFT; R1-071689,
3RD GENERATION PARTNERSHIP PROJECT
(3GPP), MOBILE COMPETENCE CENTRE ; 650,
ROUTE DES LUCIOLES ; F-06921 SOPHIA-
ANTIPOLIS CEDEX ; FRANCE, vol. RAN WG1, no.
St. Julian; 20070403, 3 April 2007 (2007-04-03),
XP050105612, [retrieved on 2007-04-03]**
• **LG ELECTRONICS: "Variable configuration sizes
of PUCCH and its impact on UL ACK/NACK
mapping relations", 3GPP DRAFT; R1-074737 UL
ACKNACK, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG1, no. Korea; 20071031, 31 October 2007
(2007-10-31), XP050108211, [retrieved on
2007-10-31]**
• **'3GPP TSG-RAN-WG1 Meeting #48bis, RI-
071689', 26 March 2007, ST. JULIANS, MALTA
article 'E-UTRA Downlink L1/L2 Control Channel
Structure', XP050105612**

EP 2 232 724 B1

**(Cont. next page)**

- '3GPP TSG RAN WG1#51, RI-074737', 05 November 2007, JEJU, KOREA article 'Variable configuration sizes of PUCCH and its impact on UL ACK/NACK mapping relations', XP050108211

- '3GPP TSG RAN WG1#51, RI-074737', 05 November 2007, JEJU, KOREA article 'Variable configuration sizes of PUCCH and its impact on UL ACK/NACK mapping relations', XP050108211

**Description**

TECHNICAL FIELD

The present invention discloses a method for use in a wireless cellular communications system in which there is a number of cells in which there can be a number of users. In the system, there is a first node which schedules traffic to and from users, and the first node uses a first channel comprised in a first kind of data frame to transmit scheduling information to users in a cell.

BACKGROUND

3GPP LTE (Long Term Evolution), usually referred to just as "LTE", is a radio access communications technology for packet-switched services. In similarity to other cellular systems, LTE systems comprise a number of cells in each of which there can be a number of users, and for each cell there is a node which controls traffic to and from users in the cell, a node which is usually referred to as eNodeB, "evolved NodeB", sometimes also referred to as an "RBS", a Radio Base Station.
Traffic from the eNodeB to the users is referred to as downlink traffic, and traffic from the users to the eNodeB is referred to as uplink traffic.
The LTE systems don't use dedicated channels, and data in both the downlink and uplink directions is transmitted in shared channels. This means that each user (also referred to as "UE", User Equipment) needs to be scheduled in time and frequency in order to be able to receive and transmit data, a scheduling which is usually carried out by the eNodeB and signalled to the UEs.
At present, LTE systems use OFDM (Orthogonal Frequency Division Multiplexing) for both downlink and uplink traffic. LTE systems at present use subframes with a duration of one millisecond, with one subframe being divided into a number of OFDM symbols, usually 12 or 14 symbols, depending on the configuration of the system. One OFDM symbol is spread out over a number of subcarriers in frequency, with the number of subcarriers depending on the available channel bandwidth.
In downlink traffic, so called scheduling assignments are transmitted for each data burst in order for a UE to understand which, if any, data in the burst that is intended for it. All UEs in a cell listen to the scheduling assignments, and if a UE detects that a scheduling assignment is directed to that UE, the UE reads in the assignment where the data is located in frequency, and how that data is coded and modulated.
For uplink traffic, the eNodeB uses so called scheduling grants to achieve a corresponding effect: if a UE detects that a scheduling grant is directed to that UE, the UE reads in the grant where in frequency the UE may transmit the data, and what coding and modulation to use.
Scheduling assignments and scheduling grants are transmitted on a physical channel called PDCCH, Physical Downlink Control Channel, with the information in the PDCCH being included in downlink subframes.
The number of scheduling assignments and scheduling grants may vary greatly between scheduling occasions, depending on the number of UEs that are scheduled. A prioritized UE may be granted the entire bandwidth in one uplink subframe (which is the scheduling granularity), but in the next uplink subframe the same UE may not have any data left to transmit, and the bandwidth may then be shared between, for example, 10 other UEs instead. Hence, the resources assigned for PDCCH is variable in the LTE subframes. In a downlink subframe, the X first OFDM symbols are used for PDCCH, where X at present can be 1, 2 or 3. The value of X can be changed between each subframe.
A prior art example can be found in the 3GPP document R1-080132, Title: "CCE aggregation dependent transport format signaling and padding analysis".

SUMMARY

The invention provides a method and a corresponding transceiver for use as a first node in a wireless cellular communications system according to the accompanying claims.
It is an object of the present invention to provide a solution by means of which the number of OFDM symbols used for PDCCH in a data frame such as an LTE sub frame can be varied in a manner which is efficient and easily adapted to the needs of the system.
This object is achieved by the present invention in that it discloses a method for use in a wireless cellular communications system which comprises a number of cells, in each of which there can be a number of users.
In the system of the invention, there is a first node which schedules traffic to and from users in a cell, and which uses a first channel comprised in a first kind of data frame to transmit scheduling information to users in a cell.
The first kind of data frame comprises a plurality of symbols, and a number of these symbols are used for the first channel. According to the inventive method, the first node assigns scheduling information to the symbols in the first channel, and the number of symbols which is used for the first channel is variable and is calculated before the scheduling information is assigned to the symbols in the first channel. The number of symbols used for the first channel is also made dependent on the number of symbols which were needed for scheduling information during a certain period of time before said calculation is made.

Thus, by means of the invention, the number of symbols used for scheduling information, which in an LTE system could be the number of OFDM symbols used for PDCCH, can be varied adaptively and according to the needs of the system at the time that the scheduling is made.

This and other advantages of the invention will become apparent from the following detailed description of the invention.

The invention also discloses a transceiver for use as an eNodeB for use in a system of the invention.

BRIEF DESCRIPTION OF THE DRAWINGS

The invention will be described in more detail in the following, with reference to the appended drawings, in which

Fig 1 shows a schematic overview of a system in which the invention may be applied, and
Fig 2 shows a downlink frame in which the invention may be applied, and
Fig 3 shows an application of the invention, and
Fig 4 shows a schematic flow chart of the method of the invention, and
Fig 5 shows a block diagram of an eNodeB of the invention.

DETAILED DESCRIPTION

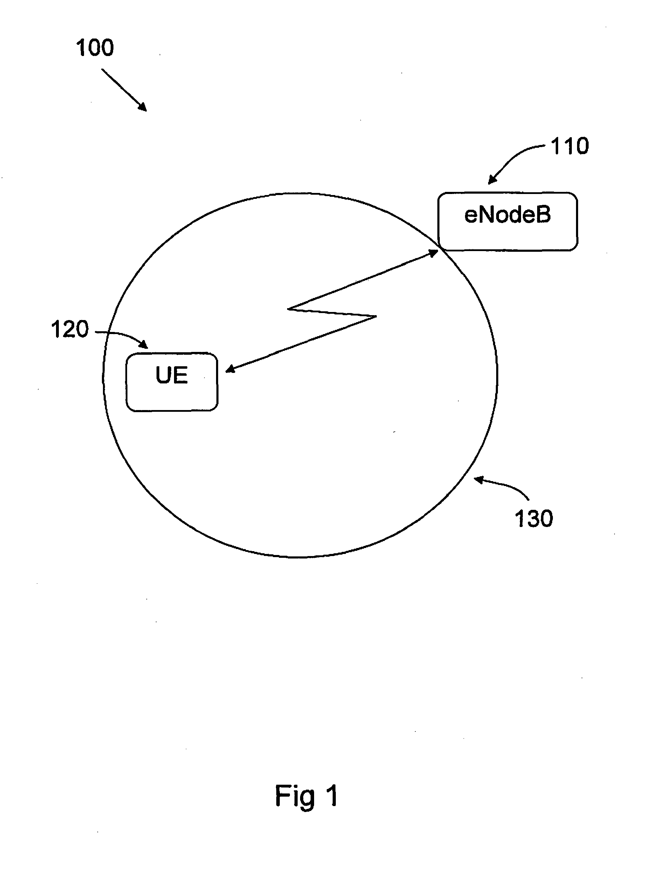

Fig 1 shows an example of a system 100 in which the invention can be applied. Thus, the system 100 is a cellular wireless communications system in which there is a number of cells, one of which is shown as 130 in fig 1.

In each cell in the system, there can be a number of users, and in fig 1 there is one user 120 shown in the cell 130. For reasons of clarity, fig 1 only shows one cell with one user in it, but it should be realized that the number of cells in the system 100, as well as the number of users in each cell, can be varied greatly in a system in which the invention is applied.

The invention is mainly intended for an LTE system, so the system of fig 1 will use terminology from the LTE systems, which will also be used in the continued description below. However, the invention may also be used in systems other than LTE systems, so the use of LTE terminology in order to facilitate the reader's understanding of the invention should not be seen as limiting the scope of the invention.

Returning now to fig 1, the user 120 in fig is labelled as "UE", since users are often referred to as "User Equipment" in LTE systems.

The system 100 also comprises a node which in LTE is referred to as eNodeB, evolved NodeB, and which, inter alia, serves to schedule traffic to and from the UEs in a cell. Traffic from the eNodeB to the UEs will from now on be referred to as downlink traffic, and traffic from the UEs to the eNodeB will be referred to as uplink traffic.

The eNodeB 110 carries out the scheduling of traffic to and from the UEs in a cell by means of so called scheduling assignments, and in the uplink direction by means of so called scheduling grants.

Both the scheduling assignments and the scheduling grants are in LTE systems transmitted from the eNodeB to the UEs on a channel known as the Physical Downlink Control Channel, abbreviated as PDCCH.

The scheduling assignments and the scheduling grants function in similar ways, although they are intended for different communication directions, i.e. downlink and uplink: all UEs in a cell listen to the PDCCH, and attempt to detect the scheduling assignments. If a UE detects a scheduling assignment, and the scheduling assignment contains the information that the scheduling assignment is intended for that particular UE, the UE reads in the assignment where there is data for the UE, and on what frequency the data is located, as well as how the data is coded and modulated.

Similarly, if a UE detects a scheduling grant which is intended for that particular UE, the UE will find information in the grant regarding which frequency the UE may transmit data on, as well as what coding and modulation the data should be sent with.

The PDCCH, i.e. the channel which is used to transit both scheduling assignments and grants, is transmitted in so called sub frames in LTE, each of which at present has a duration of 1 ms.

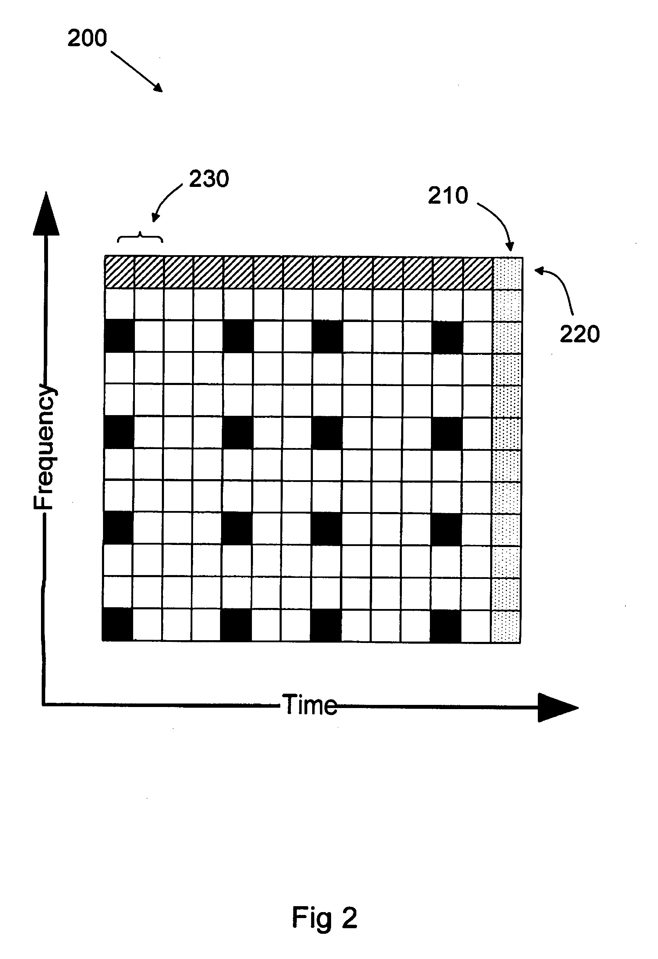

Fig 2 shows an example of an LTE sub frame 200, which will be used in the continued description of the invention. As can be seen in fig 2, the sub frame 200 is spread out both in time (the horizontal axis) and in frequency (the vertical axis), and can thus be seen as a grid or a matrix. Since the sub frame comprises a number of frequencies, it is said to have a number of sub carriers, each of which corresponds to a row (horizontal direction) 220 of the matrix.

The sub frame 200 also comprises a number of symbols, each of which corresponds to a column (vertical direction) in the matrix, i.e. a number of sub carriers in one and the same time slot. One symbol is referenced as 210 in fig 2. Since LTE uses OFDM, Orthogonal Frequency Division Multiplexing, the symbols in the sub frame are sometimes referred to as OFDM symbols instead of just as "symbols".

The sub frame 200 comprises both the PDCCH information and payload data to the UEs. In the example shown in fig 2, the sub frame 200 comprises two symbols for use by the PDCCH, shown as 230. The black squares which are shown in the sub frame 200 are reference signals which are used by the UEs, and cannot be used either for PDCCH or for data.

It can also be added that the sub frame 200 of fig 2 is shown as comprising 12 sub carriers spread out over 14 time slots, but this is merely in order to make the drawing understandable; an LTE sub frame may in fact comprise approximately 200 or more sub carriers.

In fig 2, two symbols are used for the PDCCH, shown as 230. However, the number of symbols which the PDCCH in LTE systems may use is variable, since the need for assignments and grants will vary. Also, the "size" of the PDCCH may be varied in order to make it possible to adapt the coding rate to the channel quality. At present, as many as three symbols in an LTE sub frame may be used for the PDCCH.

Thus, the problem arises of finding a good way of varying the number of OFDM symbols which are allotted to the PDCCH in an LTE sub frame. The invention proposes to solve this problem in a manner which can roughly be described in the following manner, which will be explained in more detail later in this text: as explained above, the eNodeB uses the PDCCH channel in the LTE sub frames to transmit scheduling information, e.g. scheduling assignments and scheduling grants, to the users in a cell, and the number of symbols in a sub frame which is used for the PDCCH channel is variable.

According to the invention, the number of symbols in a sub frame which is used for the PDCCH channel is calculated by the eNodeB before the scheduling information (i.e. grants and assignments) is assigned to the symbols in the PDCCH channel. In addition, according to the invention, the number of symbols in a sub frame which is used by the eNodeB for the PDCCH is made dependent on the number of symbols which were needed for scheduling information during a certain period of time before the aforementioned calculation is made by the eNodeB.

In one embodiment of the invention, the eNodeB will also consider the maximum number of UEs possible to schedule in a sub frame when deciding how many symbols to use for the PDCCH in a sub frame.

In order to further explain the invention, the concept of CCE will now be introduced. CCE is an abbreviation of Control Channel Element, and one CCE consists of 36 subcarriers arranged over one or more OFDM symbols, i.e. 36 "squares" in fig 2, which in this example (i.e. one CCE arranged in one OFDM symbol) are arranged in a column in the "grid" of a sub frame shown in fig 2. In LTE, the PDCCH uses 1, 2, 4 or 8 CCEs. In order to further improve the following description of the invention, it should also be mentioned that the output power level used by the eNodeB for the PDCCH is not fixed or standardized.

As has been described above, an LTE sub frame can comprise both the PDCCH and "payload data" for the UEs, so that for one and the same UE, in one and the same sub frame, there may be both scheduling information (assignments and grants) as well as payload data, and possibly also other traffic for the UE, such as, for example, so called "paging". Thus, an LTE sub frame may be said to be directed to a certain number of UEs. The payload data and other traffic to a UE in an LTE sub frame will accordingly comprise a certain number of CCEs.

The principles of the method of the invention will now be described in more detail with the aid of an example:

For each LTE subframe, the eNodeB calculates the following:

Y: the number of CCEs that would have been used for downlink scheduling assignments in that sub frame if there were no upper limit on the number of symbols used for PDCCH in a sub frame.

Y_actual: the amount of CCEs allotted to down link scheduling assignments in the sub frame in question, after the calculations of the eNodeB.

Z: the number of CCEs that would have been used for uplink scheduling grants in that sub frame if there were no upper limit on the number of symbols used for PDCCH in a sub frame.

Z_actual: the amount of CCEs allotted to up link scheduling grants in the sub frame in question, after the calculations of the eNodeB.

One CCE uses a fixed number of sub carriers in an OFDM symbol in a sub frame, and consequently there is a fixed number of CCEs available in each OFDM symbol in a sub frame which can be used for PDCCH.

According to the method, both Y and Z are filtered over time in the eNodeB, with a time constant in the filtering which can be varied, and which is seen as a tuning parameter in the invention. The filtered values, i.e. the results of the filtering, are referred to as Y_filtered and Z_filtered.

According to the method of the invention, for each subframe which is to be scheduled by the eNodeB, the following is done by the eNodeB before the scheduling of the sub frame starts:

- The filtering of Y and Z is updated, so that updated values of Y_filtered and Z_filtered are obtained.

- The total number of CCEs, here referred to as "Q", is calculated according to the formula:

$$Q= \text{ceil\_OFDM\_symbols}(Y\_filtered + Z\_filtered - threshold), \quad [1]$$

In equation [1] above, the operation "ceil" denotes an operation which is a rounding up to a number of CCEs that fits into is an integer number of OFDM symbols, and the threshold is used in order to avoid only a small fraction of the last OFDM symbol being utilized. The threshold is also regarded as a tuning parameter in the present invention.

- The CCEs of the sub frame are distributed to Y_actual and Z_actual according to the following:

$$Y\_actual = Q * Y\_filtered / (Y\_filtered + Z\_filtered) \quad [2]$$

$$Z\_actual = Q - Y\_actual \quad [3]$$

When the values of Y_actual and Z_actual have been obtained according to the formulae above, Y_actual is used as the number of CCEs for downlink scheduling assignments, while Z_actual is used as the number of CCEs for uplink scheduling grants.

In a certain embodiment of the invention, which will be described in more detail below, it is possible for the eNodeB to adaptively alter the number of UEs which one and the same sub frame is directed to. This is done by means of altering the output power used by the eNodeB in the CCEs in the sub frame, suitably in the following manner.

The number of CCEs for each PDCCH is selected based on the link quality. Since the CCE granularity is quite coarse, at present a CCE can comprise 1, 2, 4 or 8 sub-carriers, the output power used by the eNodeB for transmission of those CCEs may higher than necessary. Therefore, in one aspect of the invention, the eNodeB attempts to alter the output power used in the CCEs, while still fulfilling the PDCCH quality requirements, for example expressed as the error probability at the receiver. The error probability at the receiver can, for example, be calculated using the so called CQI, Channel Quality Index, which is reported by the UEs to the eNodeB.

The output power has an upper limit which is usually defined by the operator of the system, and the output power that can be released by lowering the output power in CCEs used for one UE can be used for boosting the power level of CCEs assigned to another UE. For example, an UE originally requiring 4 CCEs can use 2 CCEs with twice as high power. This still uses the same amount of "CCE-equivalents", where a "CCE-equivalent" is defined in the invention as one CCE with nominal power spectral density.

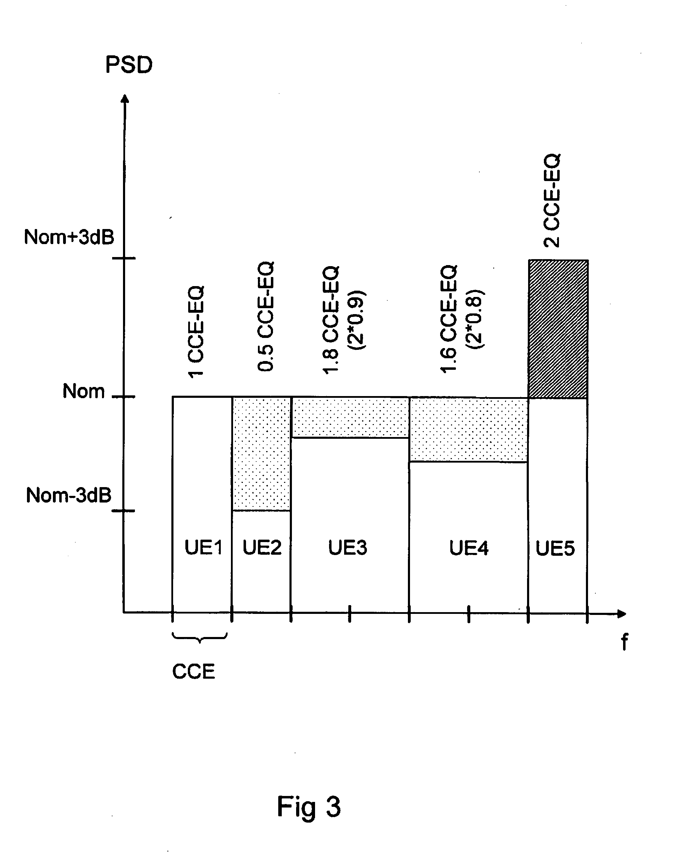

The concept of lowering the output power in one or more CCEs used for a first UE in order to boost the output power in CCEs which are used for other CCEs will now be illustrated with reference to fig 3:

Shown in the diagram in fig 3 are five UEs, denoted UE1-UE5, with the horizontal axis showing the amount of CCEs used for each UE, and the vertical axis showing the output power used for each UE. The concept of a CCE-equivalent can be found here, at UE1, which uses 1 CCE with nominal output power, i.e. UE1 uses one CCE-equivalent.

If the nominal output power level were used for all of the CCEs in fig 3, only UE1-UE4 could be fitted into one sub frame, under the assumption that six CCEs with nominal power could be fitted into the sub frame in question. Naturally, the figure six here is only an example of a fixed number of CCEs with nominal output power level being able to fit into one sub frame.

According to the invention, the eNodeB can calculate how much "excess power" is used for the CCEs of UEs 1-4, i.e. how much the output power level can be lowered in each CCE while still keeping the PDCCH quality requirements of the system. In the example shown in fig 3, these calculations lead to the following results, as is also schematically illustrated in fig 3:

A fifth UE, UE5, needs two CCE equivalents in order to fulfil the PDCCH requirements, but since only 7 CCEs with nominal power is available, only UEs 1-4 can be scheduled in the sub frame in question, since those UEs need 6 CCEs with nominal output power, i.e. 6 CCE-equivalents, shown as CCE-EQs in fig 3.

However, according to the calculations made in the eNodeB of the invention, UE2 only needs 0.5 CCE equivalents in order to fulfil the quality requirements for PDCCH, UE3 needs 1.8 CCE equivalents, i.e. 0.9 in each of the two CCEs originally scheduled for UE3, and UE4 only needs 0.8 of the two CCEs originally scheduled for it, so that the total needed by UE4 is 0.8*2=1.6

In total, the power that can be "released" equals (0.5+0.2+0.4) CCEs=1.1 CCE, and thus UE5 can be "fitted in", using the CCE seven, which was free originally, as well as the "fractions" of CCE equivalents which can be taken from UEs 2,3 and 4.

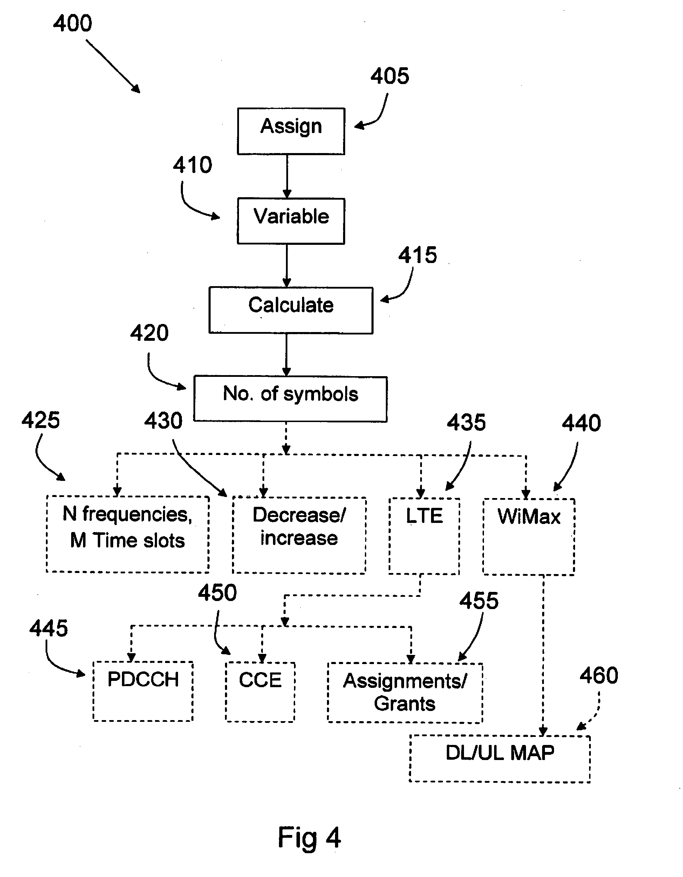

Fig 4 shows a rough flow chart of a method 400 of the invention. Steps which are options or alternatives are shown with dashed lines. As has emerged from the description above, the inventive method 400 is intended for use in a wireless cellular communications system such as the one 100 shown in fig 1, i.e. a system comprising a number of cells 130, in each of which cell there can be a number of users 120, with a first node 110, such as an eNodeB which schedules traffic to and from the users in the cell 130.

In the system in which the invention may be applied, the first node uses a first channel comprised in a first kind of data frame, such as the one 200 of fig 2, to transmit scheduling information to users in a cell. The first kind of data frame comprises a plurality of symbols, shown as 210 in fig 2, and a number of these symbols are used for the first channel.

As indicated in step 405, according to the inventive method the first node assigns scheduling information to the symbols in the first channel, and as shown in step 410, the number of symbols which is used for the first channel is variable and, step 415, is calculated before the scheduling information is assigned to the symbols in the first channel and is also, step 420, made dependent on the number of symbols which were needed for scheduling information during a certain period of time before said calculation is made.

Step 425 indicates that in one embodiment of the invention, the method may be applied to a system with multiple sub-carriers, N carriers, in one and the same frame, so that a symbol is spread over N frequencies, said frame also being divided in time with M time slots.

As indicated in step 430, in one aspect of the invention, each of the symbols is divided into elements, each of which comprises a plurality of said sub-carriers, with a nominal power level being defined for each of said elements. The power level which is used for one or more element in a frame can be decreased if a certain transmission quality can be maintained, and the difference between the nominal power level for the elements in a sub frame and the actual power level which is used for the elements in a sub frame can then be used to increase the number of elements used in the sub frame.

Step 435 shows that any of the above aspects of the inventive method may be applied to an LTE system. In such a case (LTE), as shown in step 445 the first channel will be the PDCCH channel of the LTE systems, and as shown in step 450, the elements into which the symbols are divided into will be the Control Channel Elements, the CCEs, of the LTE system. As shown in step 455, the scheduling information will in the LTE case be the scheduling assignments and scheduling grants of the LTE system.

As indicated in step 440, the aspects of the invention shown in steps 405 through 420 may also be applied to a WiMAX system. In this case i.e. WiMAX applications, the "first channel" used will, as shown in step 445, instead of PDCCH in LTE, correspond to the WiMAX system's so called DL-MAP and UL-MAP, which are MAC management messages, and also by versions of the DL and UL-MAPs, e.g. compressed MAP, and SUB DL or UL MAP.

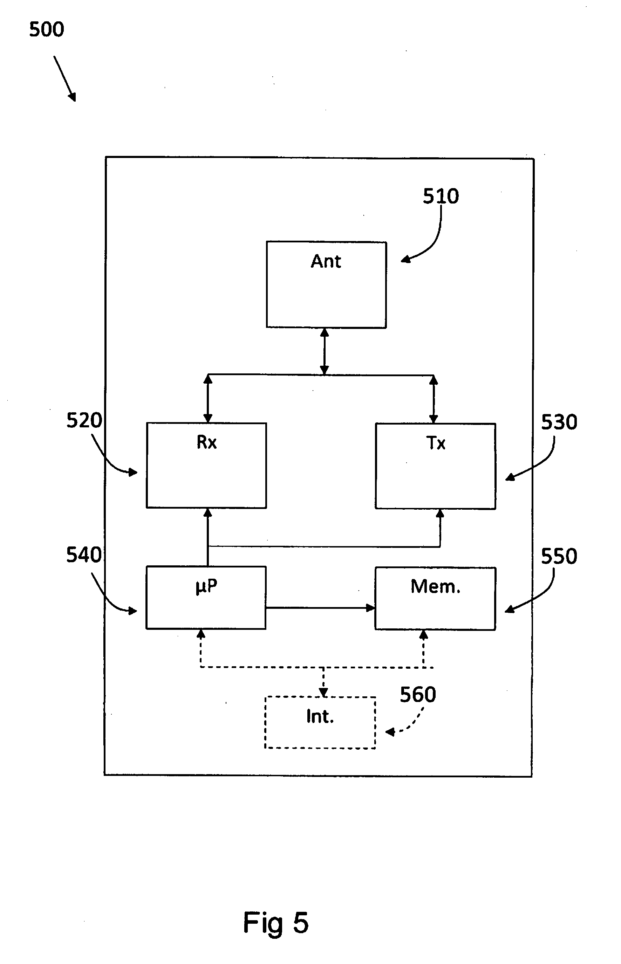

Fig 5 shows a schematic block diagram of a transceiver 500 for use as the first node described above, e.g. an eNodeB in an LTE system or a Base Station, a BS, in a WiMAX system. As indicated in fig 5, the first node 500 of the invention will comprise an antenna, shown as block 510, and will also comprise a receive part 520 and a transmit part 530. In addition, the first node 500 comprises a control means 540 such as a micro processor, as well as a memory 550. Furthermore, the first node 500 also comprises an interface 560 towards other components in the system apart from the UEs.

As has emerged from the description above, the first node of the invention is intended for use in a wireless cellular communications system such as the one 100 in fig 1, and which comprises a number of cells 130, in each of which there can be a number of users 120.

The first node of the invention will comprise means such as the controller 540 and the memory 550 for scheduling traffic to and from users in a cell in the system, as well as means such as the controller 540, the memory 550, the transmitter 530 and the antenna 510 for using a first channel such as the one 230 of fig 2, which is comprised in a first kind of data frame 200, to transmit scheduling information to users in a cell.

The first kind of data frame 200 comprises a plurality of symbols 210, and the first node 500 comprises means such as the controller 540 and the memory 550 for using a number of the symbols for the first channel and means such as the controller 540 and the memory 550 for assigning scheduling information to the symbols 210 in the first channel.

According to the invention, the first node also comprises means such as the controller 540 and the memory 550 for varying the number of symbols which is used for the first channel and for calculating the number of symbols before the scheduling information is assigned to the symbols in the first channel and may also use the components 540 and 550 for making this number dependent on the number of symbols which were needed for scheduling information during a certain period of time before said calculation is made.

In one embodiment of the invention, the components 540 and 550 may also aid the first node in being used in a system with multiple sub-carriers, N carriers, in one and the same frame, so that a symbol is spread over N frequencies, said frame also being divided in time with M time slots.

In addition, the components 540, 550 may also be used by the first node for dividing each symbol into elements, each of which comprises a plurality of said sub-carriers, with a nominal power level being defined for each of said elements, with the controller 540 being used for letting the power level which is used for one or more element in a frame be decreased if a certain transmission quality can be maintained, and for using the difference between the nominal power level for the elements in a sub frame and the actual power level used for the elements in a sub frame to increase the number of elements used in the sub frame.

According to the invention, the first node 500 may be an eNodeB in an LTE system, in which case the first channel can be the PDCCH channel of the LTE system, and the elements into which the symbols are divided into may be the Control Channel Elements, the CCEs, of the LTE system. In the LTE case, the scheduling information mentioned previously may be the scheduling assignments and scheduling grants of the LTE system.

In another embodiment of the present invention, the first node 500 may be a Base Station, a BS, in a WiMAX system. In such a case, i.e. WiMAX, the first channel may be MAC management messages in WiMAX, such as DL-MAP and/or UL-MAP, compressed MAP, or SUB DL MAP or SUB UL MAP.

The invention is not limited to the examples of embodiments described above and shown in the drawings, but may be freely varied within the scope of the appended claims.

## Claims

1. A method (400) for use in a wireless cellular communications system (100), said system comprising a number of cells (130) in each of which there can be a number of users (120), in which system there is a first node (110) which schedules traffic to and from users (120) in a cell (130), and in which system the first node uses a first channel (230) comprised in a first kind of data frame (200) to transmit scheduling information to users in a cell, said first kind of data frame (200) comprising a plurality of symbols (210), with multiple sub-carriers, N carriers, in one and the same frame, so that a symbol is spread over N frequencies, said first kind of data frame also being divided in time with M time slots, with a number of said symbols being used for the first channel, according to which method the first node assigns (405) scheduling information to the symbols (210) in the first channel, and the number of symbols which is used for the first channel is variable (410) and is calculated (415) before the scheduling information is assigned to the symbols in the first channel and is made dependent (420) on the number of symbols which were needed for scheduling information during a certain period of time before said calculation is made, the method being **characterized in that** each symbol is divided into elements, each of which comprises a plurality of said sub-carriers, with a nominal power level being defined for each of said elements, and according to which method the power level used for one or more element in a frame can be decreased if a certain transmission quality can be maintained, with the difference between the nominal power level for the elements in a sub frame and the actual power level used for the elements in a sub frame being used to increase the number of elements used in the sub frame.

2. The method (400, 435) of any of the previous claims, applied to an LTE system.

3. The method (435, 445) of claim 2, according to which the first channel is the PDCCH channel of the LTE system.

4. The method (435, 450) of claim 2 or 3, according to which the elements into which the symbols are divided into are the Control Channel Elements, the CCEs, of the LTE system.

5. The method (435, 455) of any of claims 2-4, according to which the scheduling information is the scheduling assignments and scheduling grants of the LTE system.

6. The method of claim 1, applied to a WiMAX system.

7. The method of claim 6, according to which the first channel is MAC management messages in WiMAX, such as DL-MAP and/or UL-MAP, or compressed MAP, SUB DL MAP or SUB UL MAP.

8. A transceiver (500) for use as a first node in a wireless cellular communications system (100) which comprises a number of cells (130) in each of which there can be a number of users (120), with the first node (110) comprising means (540, 550) for scheduling traffic to and from users (120) in a cell (130) and means (540, 550, 530, 510) for using a first channel (230) which is comprised in a first kind of data frame (200) to transmit scheduling information to users in a cell, said first kind of data frame (200) comprising a plurality of symbols (210), the first node comprising means (540, 550) for being used in a system with multiple sub-carriers, N carriers, in one and the same frame, so that a symbol is spread over N frequencies, said frame also being divided in time with M time slots, the first node (500) also comprising means (540, 550) for using a number of said symbols for the first channel and means (540, 550) for assigning scheduling information to the symbols (210) in the first channel, the first node also comprising means (540, 550) for varying the number of symbols which is used for the first channel and for calculating the number of symbols before the scheduling information is assigned to the symbols in the first channel and means (540, 550) for making this number dependent on the number of symbols which were needed for scheduling information during a certain period of time before said calculation is made, the first node being **characterized in that** it comprises means (540, 550) for dividing each symbol into elements, each of which comprises a plurality of said sub-carriers, with a nominal power level being defined for each of said elements, and means (540) for letting the power level used for one or more element in a frame be decreased if a certain transmission quality can be maintained, and means (540) for letting the difference between the nominal power level for the elements in a sub frame and the actual power level used for the elements in a sub frame be used to increase the number of elements used in the sub frame.

9. The first node (500) of claim 8, being an eNodeB in an LTE system.

10. The first node (500) of claim 9, in which the first channel is the PDCCH channel of the LTE system.

11. The first node (500) of claim 9 or 10, in which the elements into which the symbols are divided into are the Control Channel Elements, the CCEs, of the LTE system.

12. The first node (500) of any of claims 9-11, in which the scheduling information is the scheduling assignments and scheduling grants of the LTE system.

13. The first node (500) of claim 8, being a Base Station in a WiMAX system.

14. The first node (500) of claim 13, in which the first channel is MAC management messages in WiMAX, such as DL-MAP and/or UL-MAP, or compressed MAP, SUB DL MAP or SUB UL MAP.

## Patentansprüche

1. Verfahren (400) zur Verwendung in einem drahtlosen zellularen Kommunikationssystem (100), wobei das System eine Anzahl von Zellen (130) umfasst, wobei es in jeder davon eine Anzahl von Teilnehmern (120) geben kann, wobei es in diesem System einen ersten Knoten (110) gibt, der Verkehr zu und von Teilnehmern (120) in einer Zelle (130) zeitlich plant, und wobei in diesem System der erste Knoten einen in eine erste Art von Datenrahmen (200) einbezogenen ersten Kanal (230) verwendet, um Zeitplanungsinformation zu Teilnehmern in einer Zelle zu übertragen, wobei die erste Art von Datenrahmen (200) eine Vielzahl von Symbolen (210) mit mehreren Teilträgern, N Trägern, in ein und demselben Rahmen umfasst, sodass ein Symbol über N Frequenzen gespreizt wird, wobei die erste Art von Datenrahmen außerdem zeitlich in M Zeitschlitze unterteilt ist, wobei eine Anzahl der Symbole für den ersten Kanal verwendet wird, wobei nach diesem Verfahren der erste Knoten den Symbolen (210) im ersten Kanal Zeitplanungsinformation zuweist (405), und die Anzahl der Symbole, die für den ersten Kanal verwendet wird, variabel ist (410) und berechnet wird (415), bevor die Zeitplanungsinformation den Symbolen im ersten Kanal zugewiesen wird, und von der Anzahl der Symbole abhängig gemacht wird (420), die während eines bestimmten Zeitraums, bevor die Berechnung vorgenommen wurde, für Zeitplanungsinformation benötigt wurde, wobei das Verfahren **dadurch gekennzeichnet ist, dass** jedes Symbol in Elemente unterteilt wird, von denen jedes eine Vielzahl der Teilträger umfasst, wobei für jedes der Elemente ein Nennleistungspegel definiert wird, und wobei nach diesem Verfahren der für ein oder mehrere Elemente in einem Rahmen verwendete Leistungspegel verringert werden kann, wenn eine bestimmte Übertragungsqualität beibehalten werden kann, wobei die Differenz zwischen dem Nennleistungspegel für die Elemente in einem Teilrahmen und dem tatsächlich für die Elemente in einem Teilrahmen verwendeten Leistungspegel verwendet wird, um die Anzahl der im Teilrahmen verwendeten Elemente zu erhöhen.

**2.** Verfahren (400, 435) nach einem der vorhergehenden Ansprüche, angewendet auf ein LTE-System.

**3.** Verfahren (435, 445) nach Anspruch 2, nach dem der erste Kanal der PDCCH-Kanal des LTE-Systems ist.

**4.** Verfahren (435, 450) nach Anspruch 2 oder 3, nach dem die Elemente, in welche die Symbole unterteilt werden, die Steuerkanalelemente, die CCEs, des LTE-Systems sind.

**5.** Verfahren (435, 455) nach einem der Ansprüche 2 bis 4, nach dem die Zeitplanungsinformation die Zeitplanungszuweisungen und Zeitplanungsbewilligungen des LTE-Systems sind.

**6.** Verfahren nach Anspruch 1, angewendet auf ein WiMAX-System.

**7.** Verfahren nach Anspruch 6, nach dem der erste Kanal MAC-Verwaltungsnachrichten in WiMAX sind, wie etwa DL-MAP und/oder UL-MAP, oder komprimiertes MAP, SUB DL MAP oder SUB UL MAP.

**8.** Sendeempfänger (500) zur Verwendung als ein erster Knoten in einem drahtlosen zellularen Kommunikationssystem (100), das eine Anzahl von Zellen (130) umfasst, wobei es in jeder davon eine Anzahl von Teilnehmern (120) geben kann, wobei der erste Knoten (110) umfasst: Mittel (540, 550) zum zeitlichen Planen von Verkehr zu und von Teilnehmern (120) in einer Zelle (130) und Mittel (540, 550, 530, 510) zum Verwenden eines in eine erste Art von Datenrahmen (200) einbezogenen ersten Kanals (230), um Zeitplanungsinformation zu Teilnehmern in einer Zelle zu übertragen, wobei die erste Art von Datenrahmen (200) eine Vielzahl von Symbolen (210) umfasst; wobei der erste Knoten Mittel (540, 550) dafür umfasst, in einem System mit mehreren Teilträgern, N Trägern, in ein und demselben Rahmen verwendet zu werden, sodass ein Symbol über N Frequenzen gespreizt wird, wobei der Rahmen außerdem zeitlich in M Zeitschlitze unterteilt ist, wobei der erste Knoten (500) außerdem Mittel (540, 550) zur Verwendung einer Anzahl von Symbolen für den ersten Kanal und Mittel (540, 550) zum Zuweisen von Zeitplanungsinformation zu den Symbolen (210) im ersten Kanal umfasst, wobei der erste Knoten (500) außerdem umfasst: Mittel (540, 550) zum Variieren der Anzahl der Symbole, die für den ersten Kanal verwendet wird, und zum Berechnen der Anzahl der Symbole, bevor die Zeitplanungsinformation den Symbolen im ersten Kanal zugewiesen wird, und Mittel (540, 550) zum Abhängigmachen dieser Anzahl von der Anzahl der Symbole, die während eines bestimmten Zeitraums, bevor die Berechnung vorgenommen wurde, für Zeitplanungsinformation benötigt wurde; wobei der erste Knoten **dadurch gekennzeichnet ist, dass** er umfasst: Mittel (540, 550) zum Unterteilen jedes Symbols in Elemente, von denen jedes eine Vielzahl der Teilträger umfasst, wobei für jedes der Elemente ein Nennleistungspegel definiert wird, und Mittel (540) zum Ermöglichen, dass der für ein oder mehrere Elemente in einem Rahmen verwendete Leistungspegel verringert wird, wenn eine bestimmte Übertragungsqualität beibehalten werden kann, und Mittel (540) zum Ermöglichen, dass die Differenz zwischen dem Nennleistungspegel für die Elemente in einem Teilrahmen und dem tatsächlich für die Elemente in einem Teilrahmen verwendeten Leistungspegel verwendet wird, um die Anzahl der im Teilrahmen verwendeten Elemente zu erhöhen.

**9.** Erster Knoten (500) nach Anspruch 8, der ein eNodeB in einem LTE-System ist.

**10.** Erster Knoten (500) nach Anspruch 9, in dem der erste Kanal der PDCCH-Kanal des LTE-Systems ist.

**11.** Erster Knoten (500) nach Anspruch 9 oder 10, in dem die Elemente, in welche die Symbole unterteilt werden, die Steuerkanalelemente, die CCEs, des LTE-Systems sind.

**12.** Erster Knoten (500) nach einem der Ansprüche 9 bis 11, in dem die Zeitplanungsinformation die Zeitplanungszuweisungen und Zeitplanungsbewilligungen des LTE-Systems sind.

**13.** Erster Knoten (500) nach Anspruch 8, der eine Basisstation in einem WiMAX-System ist.

**14.** Erster Knoten (500) nach Anspruch 13, nach dem der erste Kanal MAC-Verwaltungsnachrichten in WiMAX sind, wie etwa DL-MAP und/oder UL-MAP, oder komprimiertes MAP, SUB DL MAP oder SUB UL MAP.

**Revendications**

**1.** Procédé (400) pour une utilisation dans un système de communication cellulaire sans fil (100), ledit système comprenant un certain nombre de cellules (130) dans chacune desquelles peut se trouver un certain nombre d'utilisateurs (120), système dans lequel se trouve un premier noeud (110) qui planifie un trafic vers et depuis des utilisateurs (120) dans une cellule (130), et système dans lequel le premier noeud utilise un premier canal (230) compris dans un premier type de trame de données (200) pour transmettre des informations de planification à des utilisateurs dans une cellule, ledit premier type de trame de données (200) comprenant une pluralité de symboles (210), ayant de multiples sous-porteuses, N porteuses, dans une seule et même trame, de manière à ce qu'un symbole soit réparti sur N fréquences, ledit premier type de trame de données étant également divisé en temps suivant M intervalles de temps, avec un certain nombre desdits symboles étant utilisé pour le premier canal, procédé selon lequel, le premier noeud attribue (405) des informations de planification aux symboles (210) dans le premier canal, et le nombre de symboles qui est utilisé pour le premier canal est variable (410) et est calculé (415) avant que les informations de planification soient attribuées aux symboles dans le premier canal et soient subordonnées (420) au nombre de symboles qui ont été nécessaires pour des informations de planification au cours d'une certaine période de temps avant que ledit calcul soit effectué, le procédé étant **caractérisé en ce que** chaque symbole est divisé en éléments, chacun desquels comprend une pluralité desdites sous-porteuses, avec un niveau de puissance nominale défini pour chacun desdits éléments, et selon lequel procédé, le niveau de puissance utilisé pour un ou plusieurs éléments dans une trame peut être réduit si une certaine qualité de transmission peut être maintenue, avec la différence entre le niveau de puissance nominale pour les éléments dans une sous-trame et le niveau de puissance en cours utilisé pour les éléments dans une sous-trame utilisée pour augmenter le nombre d'éléments utilisés dans la sous-trame.

2. Procédé (400, 435) selon l'une quelconque des revendications précédentes, appliqué à un système LTE.

3. Procédé (435, 445) selon la revendication 2, selon lequel le premier canal est le canal PDCCH du système LTE.

4. Procédé (435, 450) selon la revendication 2 ou la revendication 3, selon lequel les éléments, en lesquels les symboles sont divisés, sont des éléments de canal de contrôle, les CCEs, du système LTE.

5. Procédé (435, 455) selon l'une quelconque des revendications 2 à 4, selon lequel les informations de planification sont des affectations de planification ou des octrois de planification du système LTE.

6. Procédé selon la revendication 1, appliqué à un système WiMAX.

7. Procédé selon la revendication 6, selon lequel le premier canal est constitué de messages de gestion MAC dans WiMAX, tels que DL-MAP et/ou UL/MAP, ou MAP compressé, SUB DL MAP ou SUB UL MAP.

8. Émetteur-récepteur (500) pour une utilisation comme premier noeud dans un système de communication cellulaire sans fil (100) qui comprend un certain nombre de cellules (130) dans chacune desquelles un certain nombre d'utilisateurs (120) peut se trouver, avec le premier noeud (110) comprenant un moyen (540, 550) pour planifier un trafic vers et depuis des utilisateurs (120) dans une cellule (130) et un moyen (540, 550, 530, 510) pour utiliser un premier canal (230) qui est compris dans un premier type de trame de données (200) pour transmettre des informations de planification à des utilisateurs dans une cellule, ledit premier type de trame de données (200) comprenant une pluralité de symboles (210), le premier noeud comprenant un moyen (540, 550) à utiliser dans un système ayant de multiples sous-porteuses, N porteuses, dans une seule et même trame, de manière à ce qu'un symbole soit réparti sur N fréquences, ladite trame étant également divisée en temps suivant M intervalles de temps, le premier noeud (500) comprenant également un moyen (540, 550) pour utiliser un certain nombre desdits symboles pour le premier canal et un moyen (540, 550) pour attribuer des informations de planification aux symboles (210) dans le premier canal, le premier noeud comprenant également un moyen (540, 550) pour varier le nombre de symboles qui sont utilisés pour le premier canal et pour calculer le nombre de symboles avant que les informations de planification soient attribuées aux symboles dans le premier canal, et un moyen (540, 550) pour subordonner ce nombre au nombre de symboles qui ont été nécessaires pour des informations de planification au cours d'une certaine période de temps avant que ledit calcul soit effectué, le premier noeud étant **caractérisé en ce qu'**il comprend un moyen (540, 550) pour diviser chaque symbole en éléments, chacun desquels comprend une pluralité desdites sous-porteuses, avec un niveau de puissance nominale défini pour chacun desdits éléments, et un moyen (540) pour laisser le niveau de puissance utilisé pour un ou plusieurs éléments dans une trame être réduit si une certaine qualité de transmission peut être maintenue, et un moyen (540) pour laisser la différence entre le niveau de puissance nominale pour les éléments dans une sous-trame et le niveau de puissance en cours utilisé pour les éléments dans une sous-trame être utilisée pour augmenter le nombre d'éléments utilisés dans la sous-trame.

9. Premier noeud (500) selon la revendication 8, étant un eNodeB dans un système LTE.

10. Premier noeud (500) selon la revendication 9, dans lequel le premier canal est le canal PDCCH du système LTE.

11. Premier noeud (500) selon la revendication 9 ou la revendication 10, dans lequel les éléments, en lesquels les symboles sont divisés, sont les éléments de canal de contrôle, les CCEs, du système LTE.

12. Premier noeud (500) selon l'une quelconque des revendications 9 à 11, dans lequel les informations de planification sont des affectations de planification et des octrois de planification du système LTE.

13. Premier noeud (500) selon la revendication 8, étant une station de base dans un système WiMAX.

14. Premier noeud (500) selon la revendication 13, dans lequel le premier canal est constitué de messages de gestion MAC dans WiMAX, tels que DL-MAP et/ou UL-MAP, ou MAP compressé, SUB DL MAP ou SUB UL MAP.

100

110

eNodeB

120

UE

130

Fig 1

200

230

210

220

Frequency

Time

Fig 2

Fig 3

400

405

Assign

410

Variable

415

Calculate

420

No. of symbols

425     430                                        435          440

N frequencies,     Decrease/          LTE          WiMax
M Time slots       increase

                    450                            455

445

PDCCH          CCE          Assignments/                     460
                            Grants

                                              DL/UL MAP

Fig 4

500

510

Ant

520

Rx

530

Tx

540

μP

550

Mem.

560

Int.

Fig 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- CCE aggregation dependent transport format signaling and padding analysis. *3GPP document R1-080132*